# EUROPEAN PATENT APPLICATION

(11) **EP 4 632 030 A1**
(43) Date of publication of application: **15.10.2025**
(21) Application number: 23900596.0
(22) Date of filing: 04.12.2023
(51) Int. Cl.: C09J 7/38, C09J 133/06

(54) **ADHESIVE SHEET, ADHESIVE LAYER-EQUIPPED PLANAR HEATING ELEMENT, AND PLANAR HEATING MEMBER**

(30) Priority: 06.12.2022 JP 2022194684
(71) Applicant: LINTEC CORPORATION, Itabashi-ku Tokyo 173-0001 (JP)
(72) Inventor: TAKAHASHI Yoichi, Tokyo 173-0001 (JP); FUJII Yuka, Tokyo 173-0001 (JP); URAKAWA Kotaro, Tokyo 173-0001 (JP)
(74) Representative: J A Kemp LLP
(86) International application number: PCT/JP2023/043219
(87) International publication number: WO 2024/122481

(57) **Abstract**

Pressure sensitive adhesive sheet (1) includes a pressure sensitive adhesive layer (11) to be attached to a planar heating element. The average value of luminous transmittance of the pressure sensitive adhesive layer (11) in a wavelength region of 380 to 780 nm is 60% or more. The average value of luminous transmittance of the pressure sensitive adhesive layer (11) in a wavelength region of 800 to 1,000 nm is 60% or more. The adhesive strength for the pressure sensitive adhesive sheet (1) is 10 N/25 mm or more when measured through: preparing a laminate configured such that a polyethylene terephthalate film having a thickness of 100 µm and a soda-lime glass plate having a thickness of 1.1 mm are bonded together via the pressure sensitive adhesive layer (11); subjecting the laminate to 200 cycles of a heat shock test in which -35°C and 70°C are each applied for 30 minutes in alternation; and then peeling off a laminate of the polyethylene terephthalate film and the pressure sensitive adhesive layer from the soda-lime glass plate. The pressure sensitive adhesive sheet (1) is suitable for attachment to a planar heating element.

## Description

### Technical Field

The present invention relates to a pressure sensitive adhesive sheet, a pressure sensitive adhesive layer-equipped planar heating element, and a planar heating member.

### Background Art

In recent years, vehicles are increasingly being equipped with detection units such as optical detection systems (cameras, infrared sensors, LiDAR (Light Detection And Ranging), etc.), radar systems, and ultrasonic systems. Depending on the type, these detection units are installed in locations on the vehicle that are exposed to the outside air, such as the front grille portion. For this reason, in cold environments, sleet, ice, snow, etc. may adhere to the detection units.

However, sleet, ice, snow, etc. that adhere to the detection units interfere with reception by the detection units, so they have to be removed from the detection units. To this end, a planar heating element is attached to a detection unit, and the sleet, ice, snow, etc. are melted by the heat generated by the planar heating element.

When attaching a planar heating element to a detection unit, it is convenient and desirable to use a pressure sensitive adhesive. Patent Document 1 proposes a pressure sensitive adhesive composition for heating elements that contains a specific vinyl polymer and an acrylic-based pressure sensitive adhesive polymer as such a pressure sensitive adhesive.

### Prior Art Documents

### Patent Documents

Patent Document 1:JP2021-80352A

### Summary of the Invention

### Problems to be solved by the Invention

The present invention has been made in view of such actual circumstances, and objects of the present invention include providing a pressure sensitive adhesive sheet that is suitable for attachment to a planar heating element and providing a pressure sensitive adhesive layer-equipped planar heating element and a planar heating member that are obtained using the pressure sensitive adhesive sheet.

### Means for solving the Problems

To achieve the above objects, first, the present invention provides a pressure sensitive adhesive sheet comprising a pressure sensitive adhesive layer to be attached to a planar heating element, wherein an average value of luminous transmittance of the pressure sensitive adhesive layer in a wavelength region of 380 to 780 nm is 60% or more, an average value of luminous transmittance of the pressure sensitive adhesive layer in a wavelength region of 800 to 1,000 nm is 60% or more, and an adhesive strength is 10 N/25 mm or more when measured through: preparing a laminate configured such that a polyethylene terephthalate film having a thickness of 100 µm and a soda-lime glass plate having a thickness of 1.1 mm are bonded together via the pressure sensitive adhesive layer (in a case where a pressure sensitive adhesive constituting the pressure sensitive adhesive layer is active energy ray curable, the laminate is that after the bonding and active energy ray curing); subjecting the laminate to 200 cycles of a heat shock test in which -35°C and 70°C are each applied for 30 minutes in alternation; then leaving the laminate untouched under a temperature of 23°C for 24 hours; and subsequently peeling off a laminate of the polyethylene terephthalate film and the pressure sensitive adhesive layer from the soda-lime glass plate under a condition of a peel speed of 300 mm/min and a peel angle of 180° (Invention 1).

In the above invention (Invention 1), by having the above luminous transmittance physical property value, when the application target of the planar heating element to which the above pressure sensitive adhesive layer is attached is a sensor of an optical system, the sensor function in the visible light region and infrared region as well as the camera function and infrared sensor function are not impaired. In addition, by having the above value of adhesive strength after heat shock, there is little change in the pressure sensitive adhesive physical properties even when attached to a planar heating element, resulting in excellent adhesive reliability. In other words, the pressure sensitive adhesive sheet according to the above invention (Invention 1) is suitable for attachment to a planar heating element.

In the above invention (Invention 1), an average value of transmitted light diffusivity of the pressure sensitive adhesive layer in a wavelength region of 380 to 780 nm is preferably 10% or less, and an average value of transmitted light diffusivity of the pressure sensitive adhesive layer in a wavelength region of 800 to 1,000 nm is preferably 10% or less (Invention 2).

In the above invention (Invention 1, 2), the adhesive strength of the pressure sensitive adhesive sheet to soda-lime glass at 23°C (in the case where the pressure sensitive adhesive constituting the pressure sensitive adhesive layer is active energy ray curable, the adhesive strength is that after being attached to the soda-lime glass and cured by active energy rays) is preferably 10 N/25 mm or more (Invention 3).

In the above invention or inventions (Inventions 1 to 3), the adhesive strength of the pressure sensitive adhesive sheet to soda-lime glass at 85°C (in the case where the pressure sensitive adhesive constituting the pressure sensitive adhesive layer is active energy ray curable, the adhesive strength is that after being attached to the soda-lime glass and cured by active energy rays) is preferably 1 N/25 mm or more (Invention 4).

In the above invention or inventions (Inventions 1 to 4), the adhesive strength of the pressure sensitive adhesive sheet to soda-lime glass at -20°C (in the case where the pressure sensitive adhesive constituting the pressure sensitive adhesive layer is active energy ray curable, the adhesive strength is that after being attached to the soda-lime glass and cured by active energy rays) is preferably 0.2 N/25 mm or more and 20 N/25 mm or less (Invention 5).

In the above invention or inventions (Inventions 1 to 5), the pressure sensitive adhesive constituting the pressure sensitive adhesive layer is preferably an acrylic-based pressure sensitive adhesive (Invention 6).

In the above invention (Invention 6), the acrylic-based pressure sensitive adhesive is preferably an active energy ray curable pressure sensitive adhesive or a pressure sensitive adhesive formed by thermal crosslinking and curing with active energy rays (Invention 7, 8).

In the above invention or inventions (Inventions 1 to 8), the pressure sensitive adhesive sheet preferably comprises two release sheets, and the pressure sensitive adhesive layer is preferably interposed between the two release sheets so as to be in contact with release surfaces of the two release sheets (Invention 9).

Second, the present invention provides a pressure sensitive adhesive layer-equipped planar heating element comprising: a planar heating element; and the pressure sensitive adhesive layer of the pressure sensitive adhesive sheet (Invention or inventions 1 to 9) attached to at least one surface side of the planar heating element (Invention 10).

Third, the present invention provides a planar heating member comprising: a planar heating element; a protective layer; and the pressure sensitive adhesive layer of the pressure sensitive adhesive sheet (Invention or inventions 1 to 9) for bonding the planar heating element and the protective layer together (Invention 11).

### Advantageous Effect of the Invention

The pressure sensitive adhesive sheet according to the present invention is suitable for attachment to a planar heating element. Moreover, the pressure sensitive adhesive layer-equipped planar heating element and planar heating member according to the present invention are excellent in the durability due to the use of the above pressure sensitive adhesive sheet. Furthermore, when the pressure sensitive adhesive layer-equipped planar heating element and planar heating member according to the present invention are applied to a sensor of an optical system, the sensor function is not impaired by the use of the above pressure sensitive adhesive sheet.

### Brief Description of Drawings

[FIG. 1] FIG. 1 is a cross-sectional view of the pressure sensitive adhesive sheet according to an embodiment of the present invention.
[FIG. 2] FIG. 2 is a cross-sectional view of the planar heating member according to an embodiment of the present invention.
[FIG. 3] FIG. 3 is an image captured for Example 1 in the evaluation of sensor sensitivity to visible light.
[FIG. 4] FIG. 4 is an image captured for Comparative Example 1 in the evaluation of sensor sensitivity to visible light.

### Embodiments for Carrying out the Invention

Hereinafter, one or more embodiments of the present invention will be described.

### <Pressure Sensitive Adhesive Sheet>

The pressure sensitive adhesive sheet according to an embodiment of the present invention includes a pressure sensitive adhesive layer attached to a planar heating element. The average value of luminous transmittance of the pressure sensitive adhesive layer in a wavelength region of 380 to 780 nm is preferably 60% or more, and the average value of luminous transmittance of the pressure sensitive adhesive layer in a wavelength region of 800 to 1,000 nm is preferably 60% or more. In addition, the adhesive strength is preferably 10 N/25 mm or more when measured through: preparing a laminate configured such that a polyethylene terephthalate film having a thickness of 100 µm and a soda-lime glass plate having a thickness of 1.1 mm are bonded together via the above pressure sensitive adhesive layer (in a case where a pressure sensitive adhesive constituting the pressure sensitive adhesive layer is active energy ray curable, the laminate is that after the above bonding and active energy ray curing); subjecting the laminate to 200 cycles of a heat shock test in which -35°C and 70°C are each applied for 30 minutes in alternation; then leaving the laminate untouched under a temperature of 23°C for 24 hours; and subsequently peeling off a laminate of the above polyethylene terephthalate film and the above pressure sensitive adhesive layer from the soda-lime glass plate under a condition of a peel speed of 300 mm/min and a peel angle of 180° (that adhesive strength may be referred to as "adhesive strength after heat shock," hereinafter).

The luminous transmittance (and the diffuse transmittance described later) in the present specification is a value measured in accordance with JIS K7361-1: 1997, and the details of the measurement method are as described in the testing example, which will be described later. In addition, the adhesive strength in the present specification basically refers to a peel strength that is measured using a method of 180° peeling according to JIS Z0237: 2009, and the details of the measurement method are as described in the testing example, which will be described later. When the pressure sensitive adhesive constituting the pressure sensitive adhesive layer is an active energy ray curable pressure sensitive adhesive, the laminate subjected to the heat shock test is a laminate in which a polyethylene terephthalate film and a soda-lime glass plate are bonded together via the above pressure sensitive adhesive layer and the pressure sensitive adhesive layer is then subjected to active energy ray curing. Here, the active energy ray curing (cured state) refers to a state in which a new higher-order structure is formed by irradiation with active energy rays and further formation of a higher-order structure is almost completely eliminated even by further irradiation with active energy rays. The presence or absence of further formation of a higher-order structure can be determined, for example, by the amount of change in the gel fraction, etc. Specifically, when the amount of increase in the gel fraction due to further irradiation with active energy rays is small (preferably 5% or less), it can be said to be in a cured state.

In the pressure sensitive adhesive sheet according to the present embodiment, the average value of luminous transmittance of the above pressure sensitive adhesive layer in the wavelength region of 380 to 780 nm is 60% or more, and the average value of luminous transmittance of the pressure sensitive adhesive layer in the wavelength region of 800 to 1,100 nm is 60% or more; thereby, when the target of application of the planar heating element to which the pressure sensitive adhesive layer is attached is a sensor of an optical system, particularly LiDAR (Light Detection And Ranging), the sensor function in the visible light region and infrared region is not impaired. As a matter of course, the camera function or infrared sensor function is not impaired.

From the above viewpoint, the average value of luminous transmittance in the wavelength region of 380 to 780 nm is preferably 60% or more, more preferably 70% or more, particularly preferably 80% or more, further preferably 90% or more, and especially preferably 95% or more. The upper limit of the average value of luminous transmittance in the wavelength region is not particularly limited, and is most preferably 100%.

From the same viewpoint as above, the average value of luminous transmittance in the wavelength region of 800 to 1,100 nm is preferably 60% or more, more preferably 70% or more, particularly preferably 80% or more, further preferably 90% or more, and especially preferably 95% or more. The upper limit of the average value of luminous transmittance in the wavelength region is not particularly limited, and is most preferably 100%.

In the pressure sensitive adhesive sheet according to the present embodiment, the adhesive strength after heat shock is 10 N/25 mm or more, so that even when it is attached to a planar heating element, there is little change in the pressure sensitive adhesive properties, and the adhesive reliability is excellent. From this viewpoint, the above adhesive strength after heat shock is preferably 15 N/25 mm or more, more preferably 20 N/25 mm or more, particularly preferably 30 N/25 mm or more, further preferably 35 N/25 mm or more, and especially preferably 40 N/25 mm or more. The upper limit of the above adhesive strength after heat shock is not particularly limited, but from the viewpoint of reworkability, it is preferably 80 N/25 mm or less, more preferably 70 N/25 mm or less, particularly preferably 60 N/25 mm or less, and further preferably 52 N/25 mm or less.

In the pressure sensitive adhesive sheet according to the present embodiment, the average value of transmitted light diffusivity of the pressure sensitive adhesive layer in the wavelength region of 380 to 780 nm is preferably 10% or less, more preferably 5% or less, particularly preferably 3% or less, further preferably 1% or less, and especially preferably 0.8% or less. This makes it less likely that the sensor function in the visible light region, such as the LiDAR function or camera function, will be impaired when the planar heating element to which the pressure sensitive adhesive layer is attached is applied to a sensor of an optical system. The lower limit of the average value of transmitted light diffusivity in the wavelength region is not particularly limited, and is most preferably 0%, but may be 0.1% or more, particularly 0.3% or more, or even 0.5% or more. The transmitted light diffusivity can be calculated by dividing the diffuse transmittance by the total luminous transmittance.

In the pressure sensitive adhesive sheet according to the present embodiment, the average value of transmitted light diffusivity of the pressure sensitive adhesive layer in the wavelength region of 800 to 1,100 nm is preferably 10% or less, more preferably 5% or less, particularly preferably 3% or less, further preferably 1% or less, and especially preferably 0.5% or less. This makes it less likely that the sensor function in the infrared region, such as the LiDAR function or infrared sensor function, will be impaired when the planar heating element to which the pressure sensitive adhesive layer is attached is used as a sensor of an optical system. The lower limit of the average value of transmitted light diffusivity in the wavelength region is not particularly limited, and it is most preferably 0%, but it may be 0.1% or more, particularly 0.2% or more.

The gel fraction of the pressure sensitive adhesive constituting the pressure sensitive adhesive layer of the pressure sensitive adhesive sheet according to the present embodiment is preferably 30% to 90%, more preferably 35% to 85%, particularly preferably 40% to 80%, and further preferably 46% to 70%. This allows the aforementioned excellent adhesive reliability to be more readily exhibited. The measurement method for the gel fraction of the pressure sensitive adhesive in the present specification is as described in the testing example, which will be described later.

When the pressure sensitive adhesive constituting the pressure sensitive adhesive layer in the present embodiment is an active energy ray curable pressure sensitive adhesive, the gel fraction of the pressure sensitive adhesive after the active energy ray curing is preferably 40% to 95%, more preferably 45% to 90%, particularly preferably 50% to 85%, further preferably 60% to 80%, and especially preferably 64% to 75%. This allows the aforementioned excellent adhesive reliability to be more readily exhibited. In addition, the blister resistance is more excellent, and even if a plastic plate is present in the adherend and outgassing is released by heating, the occurrence of blisters such as air bubbles, floating, and delamination at the interface between the pressure sensitive adhesive layer and the adherend is suppressed.

The storage elastic modulus G' (23) at 23°C of the pressure sensitive adhesive (when the pressure sensitive adhesive is active energy ray curable, the pressure sensitive adhesive after the active energy ray curing) constituting the pressure sensitive adhesive layer of the pressure sensitive adhesive sheet according to the present embodiment is preferably 0.01 to 10 MPa and more preferably 0.05 to 5 MPa. This allows the aforementioned excellent adhesive reliability to be more readily exhibited. From the viewpoint of blister resistance, it is preferably 0.07 to 2 MPa, particularly preferably 0.08 to 1 MPa, and further preferably 0.10 to 0.80 MPa. The measurement method for the storage elastic modulus G' of the pressure sensitive adhesive in the present specification is as described in the testing example, which will be described later.

The storage elastic modulus G' (85) at 85°C of the pressure sensitive adhesive constituting the pressure sensitive adhesive layer in the present embodiment (when the pressure sensitive adhesive is active energy ray curable, the pressure sensitive adhesive after the active energy ray curing) is preferably 0.01 to 10 MPa, more preferably 0.02 to 5 MPa, particularly preferably 0.03 to 1 MPa, and further preferably 0.04 to 0.50 MPa. This allows the aforementioned excellent adhesive reliability to be more readily exhibited. In addition, when the storage elastic modulus G' (85) is 0.02 MPa or more, there is a tendency for the blister resistance to be excellent.

The storage elastic modulus G' (-20) at -20°C of the pressure sensitive adhesive constituting the pressure sensitive adhesive layer in the present embodiment (when the pressure sensitive adhesive is active energy ray curable, the pressure sensitive adhesive after the active energy ray curing) is preferably 0.1 to 1,000 MPa and more preferably 1 to 800 MPa from the viewpoint of adhesive reliability. Furthermore, from the viewpoint of blister resistance, it is particularly preferably 10 to 600 MPa and further preferably 25 to 400 MPa.

The ratio of the storage elastic modulus G' (-20) at - 20°C of the pressure sensitive adhesive constituting the pressure sensitive adhesive layer in the present embodiment (when the pressure sensitive adhesive is active energy ray curable, the pressure sensitive adhesive after the active energy ray curing) to the storage elastic modulus G' (23) at 23°C (storage elastic modulus G' (-20)/storage elastic modulus G' (23)) is preferably 1 to 2,000, more preferably 10 to 1,500, particularly preferably 50 to 1,200, further preferably 100 to 1,000, and especially preferably 200 to 800. This allows the aforementioned excellent adhesive reliability to be more readily exhibited, and also allows the blister resistance to readily be excellent.

The ratio of the storage elastic modulus G' (23) at 23°C of the pressure sensitive adhesive constituting the pressure sensitive adhesive layer in the present embodiment (when the pressure sensitive adhesive is active energy ray curable, the pressure sensitive adhesive after the active energy ray curing) to the storage elastic modulus G' (85) at 85°C (storage elastic modulus G'(23)/storage elastic modulus G' (85)) is preferably 1 to 500, more preferably 2 to 200, particularly preferably 3 to 100, further preferably 4 to 50, and especially preferably 5 to 20. This allows the aforementioned excellent adhesive reliability to be more readily exhibited, and also allows the blister resistance to be readily excellent.

The ratio of the storage elastic modulus G' (-20) at - 20°C of the pressure sensitive adhesive constituting the pressure sensitive adhesive layer in the present embodiment (when the pressure sensitive adhesive is active energy ray curable, the pressure sensitive adhesive after the active energy ray curing) to the storage elastic modulus G' (85) at 85°C (storage elastic modulus G' (-20)/storage elastic modulus G' (85)) is preferably 100 to 100,000, more preferably 300 to 50,000, particularly preferably 600 to 20,000, further preferably 900 to 10,000, and especially preferably 1,200 to 8,000. This allows the aforementioned excellent adhesive reliability to be more readily exhibited, and also allows the blister resistance to be readily excellent.

When the pressure sensitive adhesive constituting the pressure sensitive adhesive layer of the pressure sensitive adhesive sheet according to the present embodiment is active energy ray curable, the storage elastic modulus G' (23) at 23°C of the pressure sensitive adhesive before the active energy ray curing is preferably 0.01 to 1.00 MPa, more preferably 0.03 to 0.80 MPa, particularly preferably 0.05 to 0.50 MPa, and further preferably 0.10 to 0.30 MPa. This allows the aforementioned storage elastic modulus G' (23) at 23°C after the active energy ray curing to be readily satisfied.

When the pressure sensitive adhesive constituting the pressure sensitive adhesive layer of the pressure sensitive adhesive sheet according to the present embodiment is active energy ray curable, the storage elastic modulus G' (85) at 85°C of the pressure sensitive adhesive before the active energy ray curing is preferably 0.001 to 1.00 MPa, more preferably 0.003 to 0.50 MPa, particularly preferably 0.005 to 0.30 MPa, and further preferably 0.01 to 0.20 MPa. This allows the aforementioned storage elastic modulus G' (85) at 85°C after the active energy ray curing to be readily satisfied.

When the pressure sensitive adhesive constituting the pressure sensitive adhesive layer of the pressure sensitive adhesive sheet according to the present embodiment is active energy ray curable, the storage elastic modulus G' (-20) at -20°C of the pressure sensitive adhesive before active energy ray curing is preferably 0.05 to 500 MPa, more preferably 0.1 to 300 MPa, particularly preferably 0.5 to 200 MPa, and further preferably 1 to 100 MPa. This allows the aforementioned storage elastic modulus G' (-20) at -20°C after the active energy ray curing to be readily satisfied.

The adhesive strength of the pressure sensitive adhesive sheet according to the present embodiment to soda-lime glass at 23°C (when the pressure sensitive adhesive constituting the pressure sensitive adhesive layer is active energy ray curable, the adhesive strength after being applied to the soda-lime glass and cured with active energy rays) is preferably 10 N/25 mm or more, more preferably 20 N/25 mm or more, particularly preferably 30 N/25 mm or more, further preferably 40 N/25 mm or more, and especially preferably 44 N/25 mm or more. This allows the aforementioned excellent adhesive reliability to be more readily exhibited, and also allows the blister resistance to be readily excellent. The upper limit of the above adhesive strength is not particularly limited, but from the viewpoint of reworkability, it is preferably 100 N/25 mm or less, more preferably 80 N/25 mm or less, particularly preferably 60 N/25 mm or less, and further preferably 50 N/25 mm or less.

The adhesive strength of the pressure sensitive adhesive sheet according to the present embodiment to soda-lime glass at 85°C (when the pressure sensitive adhesive constituting the pressure sensitive adhesive layer is active energy ray curable, the adhesive strength after being applied to the soda-lime glass and cured with active energy rays) is preferably 1 N/25 mm or more, more preferably 2 N/25 mm or more, particularly preferably 10 N/25 mm or more, and further preferably 15 N/25 mm or more. This allows the aforementioned excellent adhesive reliability to be more readily exhibited, and also allows the blister resistance to be readily excellent. The upper limit of the above adhesive strength is not particularly limited, but from the viewpoint of reworkability, it is preferably 100 N/25 mm or less, more preferably 80 N/25 mm or less, particularly preferably 60 N/25 mm or less, and further preferably 40 N/25 mm or less.

The adhesive strength of the pressure sensitive adhesive sheet according to the present embodiment to soda-lime glass at -20°C (when the pressure sensitive adhesive constituting the pressure sensitive adhesive layer is active energy ray curable, the adhesive strength after being applied to the soda-lime glass and cured with active energy rays) is preferably 0.2 to 20 N/25 mm, more preferably 0.5 to 15 N/25 mm, particularly preferably 1 to 12 N/25 mm, and further preferably 2 to 9 N/25 mm. This allows the aforementioned excellent adhesive reliability to be more readily exhibited, and also allows the blister resistance to be readily excellent.

The ratio of the adhesive strength after heat shock to the adhesive strength at 23°C (ordinary temperature adhesive strength) for soda-lime glass (adhesive strength after heat shock/ordinary temperature adhesive strength) is preferably 0.2 to 3, more preferably 0.4 to 2.5, particularly preferably 0.6 to 2, further preferably 0.8 to 1.5, and especially preferably 0.85 to 1.05. This allows the aforementioned excellent adhesive reliability to be more readily exhibited, and also allows the blister resistance to be readily excellent.

The type of the pressure sensitive adhesive according to the present embodiment is not particularly limited, provided that it satisfies the above physical properties. Examples of the pressure sensitive adhesive include acrylic-based pressure sensitive adhesives, polyester-based pressure sensitive adhesives, polyurethane-based pressure sensitive adhesives, rubber-based pressure sensitive adhesives, and silicone-based pressure sensitive adhesives. The pressure sensitive adhesive may be any of emulsion type, solvent type, or non-solvent type and may also be crosslinked type or non-crosslinked type. Among these, acrylic-based pressure sensitive adhesives are preferred because they are excellent in the pressure sensitive adhesive physical properties, optical properties, etc. As the acrylic-based pressure sensitive adhesives, crosslinking type ones are preferred, and thermal crosslinking type ones are further preferred.

The pressure sensitive adhesive according to the present embodiment may be non-curable with active energy rays or may also be curable with active energy rays. From the viewpoint of blister resistance, it is preferred that the pressure sensitive adhesive be curable with active energy rays. In this case, the pressure sensitive adhesive sheet may be cured with active energy rays before it is attached to the adherend, or the pressure sensitive adhesive layer may be cured with active energy rays after it is attached to the adherend. From the viewpoints of adhesion reliability and blister resistance, it is particularly preferred to cure the pressure sensitive adhesive layer with active energy rays after it is attached to the adherend. In the present specification, the term "active energy ray curable pressure sensitive adhesive" refers to a pressure sensitive adhesive that is cured by irradiation with active energy rays. Hence, a pressure sensitive adhesive that has been cured by previous irradiation with active energy rays to the extent that it cannot be cured any further is not included in the term "active energy ray curable pressure sensitive adhesive."

From the viewpoint of readily satisfying the aforementioned physical properties, the pressure sensitive adhesive according to the present embodiment is preferably one obtained by crosslinking a pressure sensitive adhesive composition that contains a (meth)acrylic ester polymer (A) and a crosslinker (B) and, if desired, an active energy ray curable component (C) (such a pressure sensitive adhesive composition may be referred to as a "pressure sensitive adhesive composition P," hereinafter). The pressure sensitive adhesive obtained by crosslinking the pressure sensitive adhesive composition P is more likely to satisfy the aforementioned physical properties. As used in the present specification, the term "(meth)acrylic acid" refers to both the acrylic acid and the methacrylic acid. The same applies to other similar terms. As used in the present specification, the term "polymer" encompasses the concept of a "copolymer."

### 1. Components of Pressure Sensitive Adhesive Composition P (1) (Meth)acrylic Ester Polymer (A)

The (meth)acrylic ester polymer (A) in the present embodiment preferably contains, as a monomer unit that constitutes the polymer, a reactive group-containing monomer having in the molecule a reactive group that reacts with the crosslinker (B). The reactive group derived from the reactive group-containing monomer reacts with the crosslinker (B) to form a crosslinked structure (three-dimensional network structure), and a pressure sensitive adhesive having desired cohesive strength can be obtained.

Preferred examples of the above reactive group-containing monomer include a monomer having a hydroxyl group in the molecule (hydroxyl group-containing monomer), a monomer having a carboxy group in the molecule (carboxy group-containing monomer), and a monomer having an amino group in the molecule (amino group-containing monomer). Among these, the hydroxyl group-containing monomer or the carboxy group-containing monomer is preferred because it is excellent in the reactivity with the crosslinker (B).

Examples of the hydroxyl group-containing monomer include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate. Among these, hydroxyalkyl (meth)acrylates having a hydroxyalkyl group whose carbon number is 1 to 4 are preferred from the viewpoints of the reactivity of the hydroxyl group in the obtained (meth)acrylic ester polymer (A) with the crosslinker (B) and the copolymerizability with other monomers. Specifically, for example, 2-hydroxyethyl (meth)acrylate, 4-hydroxybutyl (meth)acrylate, or the like is preferred, and 2-hydroxyethyl acrylate or 4-hydroxybutyl acrylate is particularly preferred. These may each be used alone or two or more types may also be used in combination.

Examples of the carboxy group-containing monomer include ethylenically unsaturated carboxylic acids such as acrylic acid, methacrylic acid, crotonic acid, maleic acid, itaconic acid, and citraconic acid. Among these, acrylic acid is preferred from the viewpoints of the reactivity of the carboxy group in the obtained (meth) acrylic ester polymer (A) with the crosslinker (B) and the copolymerizability with other monomers. These may each be used alone or two or more types may also be used in combination.

Examples of the amino group-containing monomer include aminoethyl (meth)acrylate and n-butylaminoethyl (meth)acrylate. These may each be used alone or two or more types may also be used in combination. Nitrogen atom-containing monomers, which will be described later, are excluded from the amino group-containing monomers.

The (meth)acrylic ester polymer (A) preferably contains 1 to 50 mass%, more preferably 2 to 40 mass%, and particularly preferably 3 to 30 mass% of the reactive group-containing monomer as a monomer unit that constitutes the polymer. This allows a satisfactory crosslinking structure to be formed in the obtained pressure sensitive adhesive, and the aforementioned storage elastic modulus and gel fraction can be readily obtained. In particular, when the reactive group-containing monomer is a carboxyl group-containing monomer, the (meth)acrylic ester polymer (A) preferably contains 5 to 20 mass% and more preferably 8 to 12 mass% of the carboxyl group-containing monomer as a monomer unit that constitutes the polymer from the viewpoint of readily satisfying the aforementioned physical properties. When the reactive group-containing monomer is a hydroxyl group-containing monomer, the (meth)acrylic ester polymer (A) preferably contains 5 to 28 mass% and more preferably 10 to 25 mass% of the hydroxyl group-containing monomer as a monomer unit that constitutes the polymer from the viewpoint of readily satisfying the aforementioned physical properties.

The (meth)acrylic ester polymer (A) in the present embodiment preferably contains (meth)acrylic alkyl ester as a monomer unit that constitutes the polymer. This can develop good pressure sensitive adhesive properties. The alkyl group may be linear or branched.

From the viewpoint of the pressure sensitive adhesive properties, (meth)acrylic alkyl ester whose carbon number of alkyl group is 1 to 20 is preferred as the (meth)acrylic alkyl ester. Examples of the (meth)acrylic alkyl ester whose carbon number of alkyl group is 1 to 20 include methyl (meth)acrylate, ethyl (meth)acrylate, propyl (meth)acrylate, n-butyl (meth)acrylate, n-pentyl (meth)acrylate, n-hexyl (meth)acrylate, 2-ethylhexyl (meth)acrylate, isooctyl (meth)acrylate, n-decyl (meth)acrylate, n-dodecyl (meth)acrylate, myristyl (meth)acrylate, palmityl (meth)acrylate, and stearyl (meth)acrylate. Among these, from the viewpoint of more improving the pressure sensitive adhesive properties, (meth)acrylic alkyl ester whose carbon number of alkyl group is 1 to 8 is preferred, methyl (meth)acrylate, n-butyl (meth)acrylate, or 2-ethylhexyl (meth)acrylate is particularly preferred, and n-butyl acrylate or 2-ethylhexyl acrylate is further preferred. These may each be used alone or two or more types may also be used in combination.

The (meth)acrylic ester polymer (A) preferably contains 40 to 98 mass%, more preferably 45 to 95 mass%, particularly preferably 50 to 90 mass%, and further preferably 55 to 85 mass% of the (meth)acrylic alkyl ester as a monomer unit that constitutes the polymer. When the lower limit of the content is as above, the aforementioned adhesive strength after heat shock can readily be satisfied. In addition, when the lower limit of the content is as above, a suitable amount of other monomer components such as a reactive functional group-containing monomer can be introduced into the (meth)acrylic ester polymer (A), and the aforementioned storage elastic modulus and gel fraction can easily be adjusted.

The (meth)acrylic ester polymer (A) may also preferably contain a monomer having an alicyclic structure in the molecule (alicyclic structure-containing monomer) as a monomer unit that constitutes the polymer. Since the alicyclic structure-containing monomer is bulky, it is presumed that the presence of such monomers in the polymer widens the distance between the polymers, and the obtained pressure sensitive adhesive can be made excellent in the flexibility. On the other hand, the alicyclic structure-containing monomer itself can impart a certain degree of hardness to the polymer. Therefore the aforementioned storage elastic modulus or its ratio can readily be satisfied.

The carbon ring of the alicyclic structure in the alicyclic structure-containing monomer may have a saturated structure or may also have an unsaturated bond as a part. The alicyclic structure may be a monocyclic alicyclic structure or may also be a polycyclic alicyclic structure (polycyclic structure) such as a bicyclic or tricyclic structure. Like the above, from the viewpoint of adjusting the physical property values of the obtained pressure sensitive adhesive, the above alicyclic structure is preferably a polycyclic structure. In consideration of compatibility between the (meth)acrylic ester polymer (A) and other components, the above polycyclic structure is particularly preferably bicyclic to tetracyclic. Like the above, from the viewpoint of adjusting the physical property values of the obtained pressure sensitive adhesive and the viewpoint of the compatibility, the carbon number of the alicyclic structure (the number of all carbon atoms in a portion that forms the ring, and when two or more rings are independently present, the total carbon number) is preferably 5 to 15 and particularly preferably 7 to 10.

Specific examples of the above alicyclic structure-containing monomer include cyclohexyl (meth)acrylate, dicyclopentanyl (meth)acrylate, adamantyl (meth)acrylate, isobornyl (meth)acrylate, dicyclopentenyl (meth)acrylate, and dicyclopentenyloxyethyl (meth)acrylate, among which dicyclopentanyl (meth)acrylate (carbon number of alicyclic structure: 10), adamantyl (meth)acrylate (carbon number of alicyclic structure: 10), or isobornyl (meth)acrylate (carbon number of alicyclic structure: 7) is preferred because they exhibit more excellent pressure sensitive adhesive properties. In particular, isobornyl (meth)acrylate is preferred. These may each be used alone or two or more types may also be used in combination.

When containing an alicyclic structure-containing monomer as a monomer unit that constitutes the polymer, the (meth)acrylic ester polymer (A) preferably contains 1 to 20 mass%, more preferably 3 to 18 mass%, particularly preferably 5 to 15 mass%, and further preferably 7 to 12 mass% of the alicyclic structure-containing monomer. This allows the aforementioned storage elastic modulus and its ratio to readily be satisfied.

The (meth)acrylic ester polymer (A) also preferably contains a nitrogen atom-containing monomer as a monomer unit that constitutes the polymer. This provides more excellent adhesive strength to plastics such as polycarbonate and glass. As the nitrogen atom-containing monomer, a monomer having a nitrogen-containing heterocyclic ring is preferred. From the viewpoint of increasing the degree of freedom of the portion derived from the nitrogen atom-containing monomer in a high-dimensional structure of the pressure sensitive adhesive under construction, it is preferred that the nitrogen atom-containing monomer should not contain a reactive unsaturated double bond group other than one polymerizable group used during the polymerization for forming the (meth)acrylic ester polymer (A). The aforementioned reactive functional group-containing monomers are excluded from the nitrogen atom-containing monomers as referred to herein.

Examples of the monomer having a nitrogen-containing heterocycle include N-(meth)acryloyl morpholine, N-vinyl-2-pyrrolidone, N-(meth)acryloyl pyrrolidone, N-(meth)acryloyl piperidin, N-(meth)acryloyl pyrrolidine, N-(meth)acryloyl aziridine, aziridinyl ethyl (meth)acrylate, 2-vinylpyridine, 4-vinylpyridine, 2-vinylpyrazine, 1-vinylimidazole, N-vinylcarbazole, and N-vinylphthalimide. Among these, N-(meth)acryloylmorpholine exhibiting more excellent adhesive strength is preferred, and N-acryloylmorpholine is particularly preferred. These may each be used alone or two or more types may also be used in combination.

When containing a nitrogen atom-containing monomer as a monomer unit that constitutes the polymer, the (meth)acrylic ester polymer (A) preferably contains 1 to 20 mass%, more preferably 3 to 18 mass%, particularly preferably 5 to 15 mass%, and further preferably 7 to 12 mass% of the nitrogen atom-containing monomer. This allows the aforementioned physical properties such as the adhesive strength and storage elastic modulus to readily be satisfied.

The (meth)acrylic ester polymer (A) may contain other monomers, if desired, as a monomer unit that constitutes the polymer. As other monomers, monomers containing no reactive functional groups are preferred so as not to inhibit the aforementioned effects of the reactive functional group-containing monomers. Examples of such monomers include alkoxyalkyl (meth)acrylates such as methoxyethyl (meth)acrylate and ethoxyethyl (meth)acrylate, vinyl acetate, and styrene. These may each be used alone or two or more types may also be used in combination.

The (meth)acrylic ester polymer (A) is preferably a linear polymer. Such a linear polymer may promote the entanglement of molecular chains, and a pressure sensitive adhesive having the aforementioned physical properties such as gel fraction and storage elastic modulus can readily be obtained.

The (meth)acrylic ester polymer (A) is preferably a solution polymerization product obtained by a solution polymerization method. This allows a high molecular weight polymer to readily be obtained, and improvement in the cohesive force can be expected; therefore, a pressure sensitive adhesive having the aforementioned physical properties such as gel fraction and storage elastic modulus can readily be obtained.

The polymerization form of the (meth)acrylic ester polymer (A) may be a random copolymer or may also be a block copolymer.

The weight-average molecular weight of the (meth)acrylic ester polymer (A) is preferably 100,000 to 2,000,000, more preferably 200,000 to 1,600,000, particularly preferably 300,000 to 1,200,000, and further preferably 400,000 to 800,000. This allows the molecules of the (meth)acrylic ester polymer (A) to be sufficiently entangled with each other, and the desired cohesive strength can readily be obtained; therefore, a pressure sensitive adhesive having the aforementioned physical properties such as gel fraction and storage elastic modulus can readily be obtained. As used in the present specification, the weight-average molecular weight refers to a standard polystyrene equivalent value that is measured by using a gel permeation chromatography (GPC) method.

In the pressure sensitive adhesive composition P, one type of the (meth)acrylic ester polymer (A) may be used alone or two or more types may also be used in combination.

### (2) Crosslinker (B)

The crosslinker (B) can crosslink the (meth)acrylic ester polymer (A) by heating of the pressure sensitive adhesive composition P and can satisfactorily form a three-dimensional network structure. This can improve the cohesive force of the obtained pressure sensitive adhesive, and the storage elastic modulus and gel fraction of the obtained pressure sensitive adhesive can readily be adjusted within the aforementioned ranges.

It may be sufficient that the above crosslinker (B) is reactive with a reactive group possessed by the (meth)acrylic ester polymer (A). Examples of the crosslinker (B) include an isocyanate-based crosslinker, an epoxy-based crosslinker, an amine-based crosslinker, a melamine-based crosslinker, an aziridine-based crosslinker, a hydrazine-based crosslinker, an aldehyde-based crosslinker, an oxazoline-based crosslinker, a metal alkoxide-based crosslinker, a metal chelate-based crosslinker, a metal salt-based crosslinker, and an ammonium salt-based crosslinker. When the reactive group possessed by the (meth)acrylic ester polymer (A) is a hydroxyl group, it may be preferred to use, among the above, the isocyanate-based crosslinker having excellent reactivity with the hydroxyl group. When the reactive group possessed by the (meth)acrylic ester polymer (A) is a carboxyl group, it is preferred to use, among the above, the epoxy-based crosslinker having excellent reactivity with the carboxyl group. One type of the crosslinker (B) may be used alone or two or more types may also be used in combination.

The isocyanate-based crosslinker contains at least a polyisocyanate compound. Examples of the polyisocyanate compound include aromatic polyisocyanates such as tolylene diisocyanate, diphenylmethane diisocyanate and xylylene diisocyanate, aliphatic polyisocyanates such as hexamethylene diisocyanate, alicyclic polyisocyanates such as isophorone diisocyanate and hydrogenated diphenylmethane diisocyanate, biuret bodies and isocyanurate bodies thereof, and adduct bodies that are reaction products with low molecular active hydrogen-containing compounds such as ethylene glycol, propylene glycol, neopentyl glycol, trimethylol propane, and castor oil. Among these, from the viewpoint of reactivity with hydroxyl groups, trimethylolpropane-modified aromatic polyisocyanate is preferred, and trimethylolpropane-modified tolylene diisocyanate and trimethylolpropane-modified xylylene diisocyanate are particularly preferred.

Examples of the epoxy-based crosslinker include 1,3-bis(N,N-diglycidylaminomethyl)cyclohexane, N,N,N',N'-tetraglycidyl-m-xylylenediamine, ethylene glycol diglycidyl ether, 1,6-hexanediol diglycidyl ether, trimethylolpropane diglycidyl ether, diglycidylaniline, and diglycidylamine. Among these, 1,3-bis(N,N-diglycidylaminomethyl)cyclohexane may be preferred from the viewpoint of reactivity with carboxy groups.

The content of the crosslinker (B) in the pressure sensitive adhesive composition P is preferably 0.01 to 10 mass parts, more preferably 0.05 to 5 mass parts, particularly preferably 0.08 to 1 mass part, and further preferably 0.1 to 0.5 mass parts with respect to 100 mass parts of the (meth)acrylic ester polymer (A). This allows the aforementioned storage elastic modulus and gel fraction to readily be satisfied.

### (3) Active Energy Ray Curable Component (C)

In a pressure sensitive adhesive obtained by crosslinking the pressure sensitive adhesive composition P containing the active energy ray curable component (C) and curing it with active energy rays, it is considered that molecules of the active energy ray curable component (C) are polymerized with one another and the polymerized active energy ray curable component (C) is entangled with the crosslinked structure (three-dimensional network structure) of the (meth)acrylic ester polymer (A). The pressure sensitive adhesive having such a high-dimensional structure is excellent in the blister resistance.

The active energy ray curable component (C) is not particularly limited, provided that it can be cured by irradiation with active energy rays and can obtain the above effects, and may be any of a monomer, an oligomer, and a polymer or may also be a mixture thereof. Among these, a polyfunctional acrylate-based monomer is preferred because it is more excellent in the durability.

Examples of the polyfunctional acrylate-based monomer include bifunctional ones such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, hydroxypivalic acid neopentyl glycol di(meth)acrylate, dicyclopentanyl di(meth)acrylate, tricyclodecanedimethanol di(meth)acrylate, caprolactone-modified dicyclopentenyl di(meth)acrylate, ethylene oxide-modified phosphoric acid di(meth)acrylate, di(acryloxyethyl) isocyanurate, allylated cyclohexyl di(meth)acrylate, ethoxylated bisphenol A diacrylate, and 9,9-bis[4-(2-acryloyloxyethoxy) phenyl] fluorene; trifunctional ones such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, and ε-caprolactone-modified tris-(2-(meth)acryloxyethyl) isocyanurate; tetrafunctional ones such as diglycerin tetra(meth)acrylate and pentaerythritol tetra(meth)acrylate; pentafunctional ones such as propionic acid-modified dipentaerythritol penta(meth)acrylate; and hexafunctional ones such as dipentaerythritol hexa(meth)acrylate and caprolactone-modified dipentaerythritol hexa (meth) acrylate. These may each be used alone or two or more types may also be used in combination. From the viewpoint of compatibility with the (meth)acrylic ester polymer (A), the polyfunctional acrylate-based monomer preferably has a molecular weight of less than 1,000.

When the target pressure sensitive adhesive is an active energy ray curable pressure sensitive adhesive, the content of the active energy ray curable component (C) in the pressure sensitive adhesive composition P is preferably 1 to 30 mass parts, more preferably 2 to 20 mass parts, particularly preferably 3 to 14 mass parts, and further preferably 5 to 10 mass parts with respect to 100 mass parts of the (meth)acrylic ester polymer (A). This allows the blister resistance to be more excellent, and the aforementioned physical properties such as adhesive strength can readily be satisfied.

### (4) Photopolymerization Initiator (D)

When ultraviolet rays are used as the active energy rays for curing the active energy ray curable pressure sensitive adhesive, the pressure sensitive adhesive composition P preferably further contains a photopolymerization initiator (D). This allows the active energy ray curable component (C) to be efficiently polymerized, and the polymerization curing time and the irradiation amount of the active energy rays can be reduced.

Examples of the photopolymerization initiator (D) include benzoin, benzoin methyl ether, benzoin ethyl ether, benzoin isopropyl ether, benzoin-n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexyl phenyl ketone, 2-methyl-1-[4-(methylthio)phenyl]-2-morpholino-propan-1-one, 4-(2-hydroxyethoxy)phenyl-2-(hydroxy-2-propyl) ketone, benzophenone, p-phenylbenzophenone, 4,4'-diethylaminobenzophenone, dichlorobenzophenone, 2-methylanthraquinone, 2-ethylanthraquinone, 2-tert-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethyl ketal, acetophenone dimethyl ketal, p-dimethylaminobenzoate, oligo[2-hydroxy-2-methyl-1[4-(1-methylvinyl)phenyl]propane], 2,4,6-trimethylbenzoyl-diphenyl-phosphine oxide, and bis(2,4,6-trimethylbenzoyl)-phenylphosphine oxide. These may each be used alone or two or more types may also be used in combination.

When the target pressure sensitive adhesive is an active energy ray curable pressure sensitive adhesive, the content of the photopolymerization initiator (D) in the pressure sensitive adhesive composition P is preferably 0.1 to 30 mass parts, particularly preferably 1 to 20 mass parts, and further preferably 5 to 12 mass parts with respect to 100 mass parts of the active energy ray curable component (C). This allows the obtained pressure sensitive adhesive to readily satisfy the aforementioned physical properties such as adhesive strength.

### (5) Various Additives

If desired, the pressure sensitive adhesive composition P can contain one or more of various additives, such as a silane coupling agent, a corrosion inhibitor, an ultraviolet absorber, an antistatic, a tackifier, an antioxidant, a light stabilizer, a softening agent, and a refractive index adjuster, which are commonly used in acrylic-based pressure sensitive adhesives. The additives which constitute the pressure sensitive adhesive composition P are deemed not to include a polymerization solvent or a diluent solvent, which will be described later.

The pressure sensitive adhesive composition P preferably contains a silane coupling agent among the above. This can improve the interfacial adhesion with an adherend even when the adherend is a plastic member or a glass member, and the adhesive reliability can be more excellent.

The silane coupling agent is preferably an organosilicon compound having at least one alkoxysilyl group in the molecule, which has satisfactory compatibility with the (meth)acrylic ester polymer (A) and luminous transmissive properties.

Examples of such a silane coupling agent include polymerizable unsaturated group-containing silicon compounds such as vinyltrimethoxysilane, vinyltriethoxysilane and methacryloxypropyltrimethoxysilane, silicon compounds having an epoxy structure, such as 3-glycidoxypropyltrimethoxysilane and 2-(3,4-epoxycyclohexyl)ethyltrimethoxysilane, mercapto group-containing silicon compounds such as 3-mercaptopropyltrimethoxysilane, 3-mercaptopropyltriethoxysilane and 3-mercaptopropyldimethoxymethylsilane, amino group-containing silicon compounds such as 3-aminopropyltrimethoxysilane, N-(2-aminoethyl)-3-aminopropyltrimethoxysilane and N-(2-aminoethyl)-3-aminopropylmethyldimethoxysilane, 3-chloropropyltrimethoxysilane, 3-isocyanatepropyltriethoxysilane, and condensates of at least one of these and an alkyl group-containing silicon compound such as methyltriethoxysilane, ethyltriethoxysilane, methyltrimethoxysilane and ethyltrimethoxysilane. These may each be used alone or two or more types may also be used in combination.

The content of the silane coupling agent in the pressure sensitive adhesive composition P is preferably 0.01 to 1.2 mass parts, particularly preferably 0.05 to 0.8 mass parts, and further preferably 0.1 to 0.4 mass parts with respect to 100 mass parts of the (meth)acrylic ester polymer (A). This can satisfactorily improve the interfacial adhesion with the adherend, contributing to improved adhesive reliability and improved blister resistance.

The pressure sensitive adhesive composition P also preferably contains a corrosion inhibitor. This can prevent corrosion of metals in contact with the pressure sensitive adhesive layer. Examples of corrosion inhibitors include carbodiimide compounds, adsorptive inhibitors, and chelate-forming metal deactivators. Examples of chelate-forming metal deactivators include triazole group-containing compounds and benzotriazole group-containing compounds.

Examples of the triazole group-containing compounds include 1,2,4-triazole, 1,2,3-triazole, 4-amino-1,2,4-triazole, and N,N-bis(2-ethylhexyl)-1,2,4-triazol-1-ylmethanamine. Examples of the benzotriazole group-containing compounds include 1,2,3-benzotriazole, methylbenzotriazole, methylbenzotriazole potassium salt, carboxybenzotriazole, 1-[N,N-bis(2-ethylhexyl)aminomethyl)benzotriazole, 1-[N,N-bis(2-ethylhexyl)aminomethyl)-4-ethyl-1H-benzotriazole, 3-(N-salicyloyl)amino-1,2,4-triazole, 2,2'-[[(methyl-1H-benzotriazol-1-yl)methyl]imino]bisethanol, 2-(2'-hydroxy-5'-methylphenyl)benzotriazole, 2-(2'-hydroxy-5'-tert-octylphenyl)benzotriazole, 2-(2'-hydroxy-3',5'-di-tert-amylphenyl)benzotriazole, 1-(methoxymethyl)-1H-benzotriazole, 1H-benzotriazole-1-methanol, and 1-(chloromethyl)-1H-benzotriazole.

The content of the corrosion inhibitor in the pressure sensitive adhesive composition P is preferably 0.01 to 5 mass parts, particularly preferably 0.05 to 3 mass parts, and further preferably 0.1 to 1 mass part with respect to 100 mass parts of the (meth)acrylic ester polymer (A).

The pressure sensitive adhesive composition P preferably contains an ultraviolet ray absorber. Examples of the ultraviolet ray absorber include compounds such as benzophenone-based, benzotriazole-based, benzoate-based, benzoxazinone-based, triazine-based, phenylsalicylate-based, cyanoacrylate-based, and nickel complex salt-based compounds. These may each be used alone or two or more types may also be used in combination.

The content of the ultraviolet absorber in the pressure sensitive adhesive composition P is preferably 0.1 to 20 mass parts, particularly preferably 0.5 to 10 mass parts, and further preferably 1 to 5 mass parts with respect to 100 mass parts the (meth)acrylic ester polymer (A).

### 2. Preparation of Pressure Sensitive Adhesive Composition P

The pressure sensitive adhesive composition P can be prepared through producing the (meth)acrylic ester polymer (A) and mixing the obtained (meth)acrylic ester polymer (A) and the crosslinker (B), and, if desired, adding the active energy ray curable component (C), the photopolymerization initiator (D), other additives, etc.

The (meth)acrylic ester polymer (A) can be produced by polymerizing a mixture of the monomers which constitute the polymer using a commonly-used radical polymerization method. Polymerization of the (meth)acrylic ester polymer (A) is preferably carried out by a solution polymerization method, if desired, using a polymerization initiator. However, the present invention is not limited to this, and the polymerization may be performed without a solvent.

Examples of the polymerization solvent include ethyl acetate, n-butyl acetate, isobutyl acetate, toluene, acetone, hexane, and methyl ethyl ketone, and two or more types thereof may also be used in combination. Examples of the polymerization initiator include azo-based compounds and organic peroxides, and two or more types thereof may also be used in combination. In the above polymerization step, the weight-average molecular weight of the polymer to be obtained can be adjusted by compounding a chain transfer agent such as 2-mercaptoethanol.

After the (meth)acrylic ester polymer (A) is obtained, the pressure sensitive adhesive composition P (coating solution) diluted with a solvent may be obtained through adding the crosslinker (B) and, if desired, a dilution solvent, the active energy ray curable component (C), the photopolymerization initiator (D), other additives, etc. to the solution of the (meth)acrylic ester polymer (A) and sufficiently mixing them. If any of the above components is in the form of a solid, or if precipitation occurs when the component is mixed with another component in an undiluted state, the component may be preliminarily dissolved in or diluted with a dilution solvent alone and then mixed with the other component.

Examples of the above dilution solvent for use include aliphatic hydrocarbons such as hexane, heptane and cyclohexane, aromatic hydrocarbons such as toluene and xylene, halogenated hydrocarbons such as methylene chloride and ethylene chloride, alcohols such as methanol, ethanol, propanol, butanol and 1-methoxy-2-propanol, ketones such as acetone, methyl ethyl ketone, 2-pentanone, isophorone and cyclohexanone, esters such as ethyl acetate and butyl acetate, and cellosolve-based solvents such as ethyl cellosolve.

The concentration/viscosity of the coating solution thus prepared is not particularly limited and can be appropriately selected depending on the situation, provided that the concentration/viscosity falls within any range in which the coating is possible. For example, the pressure sensitive adhesive composition P may be diluted to a concentration of 10 to 60 mass%. When obtaining the coating solution, the addition of a dilution solvent or the like is not a necessary condition, and the dilution solvent may not be added if the pressure sensitive adhesive composition P has a viscosity or the like that enables the coating. In this case, the pressure sensitive adhesive composition P may be a coating solution in which the polymerization solvent itself for the (meth)acrylic ester polymer (A) is used as a dilution solvent.

### 3. Production of Pressure Sensitive Adhesive

The pressure sensitive adhesive is obtained by crosslinking the pressure sensitive adhesive composition P Crosslinking of the pressure sensitive adhesive composition P can be ordinarily performed by heat treatment. Drying treatment when volatilizing a diluent solvent and the like from the coating film of the pressure sensitive adhesive composition P applied to a desired object can also serve as the above heat treatment.

The heating temperature of the heat treatment is preferably 50°C to 150°C and particularly preferably 70°C to 120°C. The heating time is preferably 10 seconds to 10 minutes and particularly preferably 50 seconds to 2 minutes.

After the heat treatment, if necessary, an aging period at an ordinary temperature (e.g., 23°C, 50% RH) for about 1 to 2 weeks may be provided. When the aging period is necessary, the pressure sensitive adhesive is formed after the aging period passes, while when the aging period is not necessary, the pressure sensitive adhesive is formed after the heat treatment.

The above heat treatment (and aging) allows the (meth)acrylic ester polymer (A) to be sufficiently crosslinked via the crosslinker (B), and the pressure sensitive adhesive is obtained.

When the pressure sensitive adhesive composition P contains the active energy ray curable component (C), it is also preferred to perform the above crosslinking (thermal crosslinking) and to cure the pressure sensitive adhesive composition P with active energy rays. The active energy rays refer to electromagnetic wave or charged particle radiation having an energy quantum, and specific examples of the active energy rays include ultraviolet rays and electron rays. Among the active energy rays, ultraviolet rays are particularly preferred because they are easy to handle.

Irradiation with ultraviolet rays can be performed using a high-pressure mercury lamp, a Heraeus H lamp, a xenon lamp, etc., and the amount of irradiation with ultraviolet rays is preferably about 50 to 1,000 mW/cm² in terms of illuminance, and preferably about 100 to 500 mW/cm². The light amount is preferably 50 to 10,000 mJ/cm², more preferably 200 to 7,000 mJ/cm², and particularly preferably 500 to 3,000 mJ/cm². On the other hand, irradiation with electron rays can be performed by an electron ray accelerator or the like, and the irradiation amount of the electron rays is preferably about 10 to 1,000 krad.

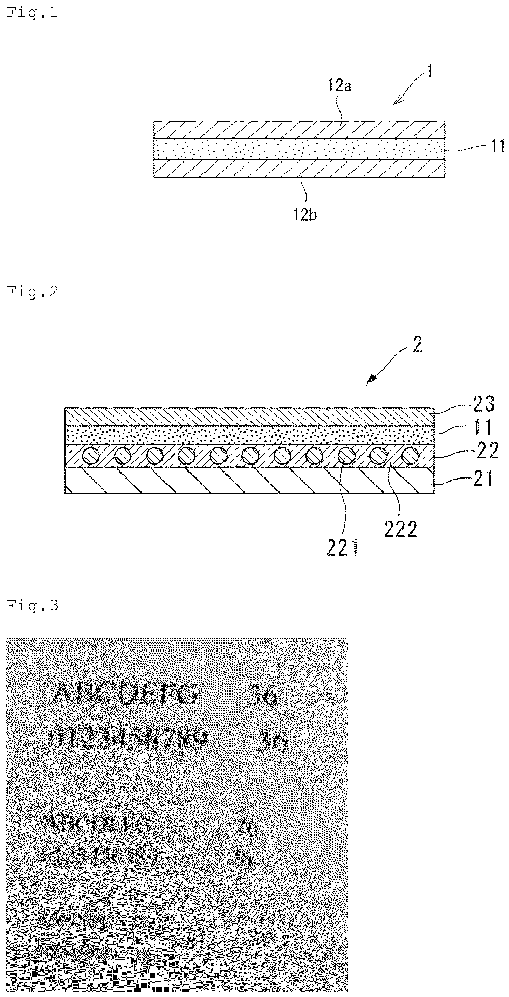

The pressure sensitive adhesive sheet according to the present embodiment has a pressure sensitive adhesive layer composed of the above-described pressure sensitive adhesive. FIG. 1 illustrates a specific configuration as an example of the pressure sensitive adhesive sheet according to the present embodiment. As illustrated in FIG. 1, a pressure sensitive adhesive sheet 1 according to an embodiment is composed of two release sheets 12a and 12b and a pressure sensitive adhesive layer 11 that is interposed between the two release sheets 12a and 12b so as to be in contact with release surfaces of the two release sheets 12a and 12b. As used in the present specification, the release surface of a release sheet refers to a surface having releasability in the release sheet, and examples of the release surface include both a surface subjected to release treatment and a surface that exhibits releasability even without being subjected to release treatment.

### 1. Each Member

### (1) Pressure Sensitive Adhesive Layer

The pressure sensitive adhesive layer 11 is composed of the aforementioned pressure sensitive adhesive, and is preferably composed of a pressure sensitive adhesive obtained by crosslinking the pressure sensitive adhesive composition P, or a pressure sensitive adhesive obtained by thermally crosslinking and curing the pressure sensitive adhesive composition P with active energy rays.

The thickness of the pressure sensitive adhesive layer 11 in the pressure sensitive adhesive sheet 1 according to the present embodiment (measured according to JIS K7130) is preferably 5 to 1,000 µm, more preferably 10 to 800 µm, particularly preferably 15 to 500 µm, further preferably 20 to 300 µm, especially preferably 25 to 200, and most preferably 30 to 160 µm. This allows the desired adhesive strength to be readily exhibited and also allows the aforementioned luminous transmittance to be readily satisfied. The pressure sensitive adhesive layer 11 may be formed as a single layer or may also be formed by laminating two or more layers.

### (2) Release Sheets

The release sheets 12a and 12b are to protect the pressure sensitive adhesive layer 11 until the use of the pressure sensitive adhesive sheet 1 and are removed when using the pressure sensitive adhesive sheet 1 (pressure sensitive adhesive layer 11). In the pressure sensitive adhesive sheet 1 according to the present embodiment, one or both of the release sheets 12a and 12b may be unnecessary.

Examples of the release sheets 12a and 12b for use include polyethylene films, polypropylene films, polybutene films, polybutadiene films, polymethylpentene films, polyvinyl chloride films, vinyl chloride copolymer films, polyethylene terephthalate films, polyethylene naphthalate films, polybutylene terephthalate films, polyurethane films, ethylene vinyl acetate films, ionomer resin films, ethylene-(meth)acrylic acid copolymer films, ethylene-(meth)acrylic ester copolymer films, polystyrene films, polycarbonate films, polyimide films, and fluorine resin films. Crosslinked films thereof may also be used. Laminate films each obtained by laminating a plurality of such films may also be used.

It is preferred to perform release treatment for the release surfaces (in particular, surfaces to be in contact with the pressure sensitive adhesive layer 11) of the release sheets 12a and 12b. Examples of a release agent to be used for the release treatment include alkyd-based, silicone-based, fluorine-based, unsaturated polyester-based, polyolefin-based, and wax-based release agents. Preferably, one of the release sheets 12a and 12b is an easy release sheet with a large release force while the other is a tight release sheet with a small release force.

The thickness of the release sheets 12a and 12b is not particularly limited, but is preferably 20 to 200 µm and more preferably 20 to 150 µm from the viewpoint of easy handling

### 2. Production of Pressure Sensitive Adhesive Sheet

As an example of production of the pressure sensitive adhesive sheet 1, the case of using the above pressure sensitive adhesive composition P will be described. A coating layer is formed through coating the release surface of one release sheet 12a (or 12b) with a coating liquid of the pressure sensitive adhesive composition P and performing heat treatment to thermally crosslink the pressure sensitive adhesive composition P, and then the release surface of the other release sheet 12b (or 12a) is overlapped on the coating layer. When an aging period is necessary, the above coating layer becomes the pressure sensitive adhesive layer 11 after the aging period passes, while when an aging period is not necessary, the above layer formed as such becomes the pressure sensitive adhesive layer 11. When the pressure sensitive adhesive composition P contains the active energy ray curable component (C), the coating layer may be subjected to the active energy ray curing by performing the above thermal crosslinking and irradiation with active energy rays. Thus, the above pressure sensitive adhesive sheet 1 is obtained. The conditions for the heat treatment, aging, and active energy ray irradiation are as described previously.

Another example of production of the pressure sensitive adhesive sheet 1 includes coating the release surface of one release sheet 12a with a coating liquid of the pressure sensitive adhesive composition P and performing heat treatment to thermally crosslink the pressure sensitive adhesive composition P to form a coating layer, thus obtaining the release sheet 12a with the coating layer. The example of production further includes coating the release surface of the other release sheet 12b with a coating liquid of the above pressure sensitive adhesive composition P and performing heat treatment to thermally crosslink the pressure sensitive adhesive composition P to form a coating layer, thus obtaining the release sheet 12b with the coating layer. Then, the release sheet 12a with the coating layer and the release sheet 12b with the coating layer are bonded together so that both the coating layers are in contact with each other. When an aging period is necessary, the above laminated coating layers become the pressure sensitive adhesive layer 11 after the aging period passes, while when an aging period is not necessary, the above laminated coating layers formed as such become the pressure sensitive adhesive layer 11. When the pressure sensitive adhesive composition P contains the active energy ray curable component (C), the coating layers may be subjected to the active energy ray curing by performing the above thermal crosslinking and irradiation with active energy rays. Thus, the pressure sensitive adhesive sheet 1 is obtained. According to this production example, even if the pressure sensitive adhesive layer 11 is thick, it can be stably produced.

Examples of the method of coating with the above coating liquid of the pressure sensitive adhesive composition P include a bar coating method, a knife coating method, a roll coating method, a blade coating method, a die coating method, and a gravure coating method.

### <Pressure Sensitive Adhesive Layer-equipped Planar Heating Element>

The pressure sensitive adhesive layer-equipped planar heating element according to an embodiment of the present invention includes a planar heating element and a pressure sensitive adhesive layer attached to at least one surface side of the planar heating element. The pressure sensitive adhesive layer in the present embodiment is the pressure sensitive adhesive layer of the pressure sensitive adhesive sheet according to the aforementioned embodiment.

As the planar heating element, for example, a sheet-like one, plate-like one, or the like having a flat surface is exemplified, and it may be flexible or pliable or may also be a rigid body. Examples of such planar heating elements include: those in which metal wires such as nichrome wires and iron chrome wires or electric heating wires such as carbon fibers are embedded in resin; those in which conductive fillers are dispersed in resin; those composed of conductive fibers containing metals, carbon black, carbon nanotubes, etc.; those composed of plastic films coated with conductive paint; and those composed of conductive materials such as tin-doped indium oxide (ITO) and conductive polymers.

Examples of resins that can be used in planar heating elements in which electric heating wires are embedded in resin include thermosetting resins such as epoxy resins, phenolic resins, melamine resins, polyester resins, urethane resins, and acrylic resins, and thermoplastic resins such as polycarbonate resins, polyester resins, polyamide resins, and polyimide resins that have heat resistance to the heat generated by the electric heating wires. These resins may be pressure sensitive adhesives or hardnable pressure sensitive adhesive that have pressure sensitive adhesive properties.

The thickness of the planar heating element is not particularly limited, but is usually preferably 1 to 5,000 µm, more preferably 5 to 3,000 µm, particularly preferably 10 to 1,000 µm, and further preferably 15 to 500 µm.

On the surface of the pressure sensitive adhesive layer of the pressure sensitive adhesive layer-equipped planar heating element of the present embodiment opposite the planar heating element, a protective layer of a planar heating member, which will be described later, may be laminated, or a detection unit (sensor) such as a desired optical detection system (LiDAR, camera, infrared sensor, etc.), radar system, ultrasonic system, etc. may be laminated.

### <Planar Heating Member>

The planar heating member of an embodiment of the present invention includes a planar heating element, a protective layer, and a pressure sensitive adhesive layer that bonds the planar heating element and the protective layer together. The pressure sensitive adhesive layer in the present embodiment is the pressure sensitive adhesive layer of the pressure sensitive adhesive sheet according to the aforementioned embodiment.

FIG. 2 illustrates a specific configuration as an example of the planar heating member according to the present embodiment. As illustrated in FIG. 2, a planar heating member 2 according to an embodiment is composed of a substrate 21, a heater layer 22 laminated on one surface side of the substrate 21, a pressure sensitive adhesive layer 11 laminated on the heater layer 22 on the side opposite the substrate 21, and a protective layer 23 laminated on the pressure sensitive adhesive layer 11 on the side opposite the heater layer 22.

The substrate 21 supports the heater layer 22 and is composed, for example, of a glass plate, a plastic plate, a glass film, a plastic film, or the like. When the detection unit to which the planar heating member 2 according to the present embodiment is applied is a sensor of an optical system, the substrate 21 preferably has luminous transmissive properties.

The thickness of the substrate 21 is not particularly limited, but is usually preferably 100 to 5,000 µm, more preferably 300 to 4,000 µm, particularly preferably 500 to 3,500 µm, and further preferably 1,000 to 3,000 µm.

The heater layer 22 in the present embodiment is, as an example, a planar heating element in which an electric heating wire 221 is embedded in a resin 222, but the present invention is not limited to this. The material and thickness of the heater layer 22 are as aforementioned for the planar heating element. In the present embodiment, since the heater layer 22 is attached to the substrate 21, the resin 222 is preferably a pressure sensitive adhesive or a hardnable pressure sensitive adhesive, particularly preferably a hardnable pressure sensitive adhesive, and further preferably a thermosetting hardnable pressure sensitive adhesive. As a thermosetting hardnable pressure sensitive adhesive, an epoxy-based hardnable pressure sensitive adhesive is particularly preferred.

The pressure sensitive adhesive layer 11 in the present embodiment is the pressure sensitive adhesive layer 11 of the pressure sensitive adhesive sheet 1 according to the aforementioned embodiment.

The protective layer 23 protects the heater layer 22, and is composed, for example, of a plastic film, a plastic plate, a glass plate, or the like. When the detection unit to which the planar heating member 2 according to the present embodiment is applied is a sensor of an optical system, the protective layer 23 preferably has luminous transmissive properties.

Examples of plastic films include polyester films such as polyethylene terephthalate, polybutylene terephthalate, and polyethylene naphthalate, polyurethane films, polyethylene films, polypropylene films, cellulose films such as those of triacetyl cellulose, plastic films such as polyvinyl chloride films, polyvinylidene chloride films, polyvinyl alcohol films, ethylene-vinyl acetate copolymer films, polystyrene films, polycarbonate films, acrylic resin films, norbornene-based resin films, and cycloolefin resin films; and laminates of two or more of these. The plastic film may be uniaxially or biaxially stretched. Among the above, polycarbonate films are particularly preferred from the viewpoint of impact resistance.

The thickness of the protective layer 23 is not particularly limited, but is usually preferably 10 to 500 µm, more preferably 50 to 300 µm, particularly preferably 75 to 250 µm, and further preferably 100 to 200 µm.

A preferred example of production of the planar heating member 2 according to the present embodiment will be described.

First, the heater layer 22, which has been preliminarily produced by an ordinary method, is laminated on the substrate 21. When the resin 222 of the heater layer 22 has pressure sensitive adhesive properties, the heater layer 22 is attached to the substrate 21. When the resin 222 of the heater layer 22 is thermosetting, it is thermally cured at this stage.

Next, one release sheet 12a is removed from the pressure sensitive adhesive sheet 1 according to the aforementioned embodiment, and the exposed pressure sensitive adhesive layer 11 is attached to the heater layer 22. Subsequently, the other release sheet 12b is removed from the pressure sensitive adhesive layer 11, and the protective layer 23 is attached to the exposed pressure sensitive adhesive layer 11.

When the pressure sensitive adhesive layer 11 is active energy ray curable, the pressure sensitive adhesive layer 11 is irradiated with active energy rays from the desired side, preferably the protective layer 23 side, to cure the pressure sensitive adhesive layer 11. The irradiation conditions for the active energy rays are the same as when the pressure sensitive adhesive layer 11 is cured with active energy rays at the stage of the pressure sensitive adhesive sheet 1.

The planar heating member 2 according to the present embodiment is laminated with a detection unit (sensor) such as a desired optical detection system (LiDAR, camera, infrared sensor, etc.), radar system, ultrasonic system, etc. For bonding the planar heating member 2 to the detection unit, it is preferred to use the pressure sensitive adhesive sheet 1 (pressure sensitive adhesive layer 11) according to the aforementioned embodiment, but other pressure sensitive adhesive sheets, etc. can also be used.

The planar heating member 2 according to the present embodiment uses the pressure sensitive adhesive layer 11, so that when the planar heating member 2 is applied to a sensor of an optical system, particularly LiDAR, the sensor function in the visible light and infrared light regions is not impaired. Moreover, even when low and high temperatures are repeatedly applied, the pressure sensitive adhesive of the pressure sensitive adhesive layer 11 changes little in its pressure sensitive adhesive physical properties, so that the bonding state between the heater layer 22 and protective layer 23 is well maintained, resulting in excellent adhesive reliability and durability.

It should be appreciated that the aforementioned embodiments are described to facilitate understanding of the present invention and are not described to limit the present invention. It is therefore intended that the elements disclosed in the above embodiments include all design changes and equivalents to fall within the technical scope of the present invention.

For example, either one of the release sheets 12a and 12b in the pressure sensitive adhesive sheet 1 may be omitted. The substrate 21 of the planar heating member 2 may also be omitted.

In the present specification, unless otherwise specified, the statement of "X to Y" (X and Y are arbitrary numbers) encompasses not only the meaning of "X or more and Y or less" but also the meaning of "preferably more than X" or "preferably less than Y." In addition, unless otherwise specified, the statement of "X or more" (X is an arbitrary number) encompasses the meaning of "preferably more than X," and the statement of "Y or less" (Y is an arbitrary number) encompasses the meaning of "preferably less than Y."

### Examples

Hereinafter, the present invention will be described further specifically with reference to examples, etc., but the scope of the present invention is not limited to these examples, etc.

### <Example 1>

### 1. Preparation of (Meth)acrylic Ester Polymer

The (meth)acrylic ester polymer (A) was prepared by using a solution polymerization method to copolymerize 30 mass parts of n-butyl acrylate, 25 mass parts of 2-ethylhexyl acrylate, 10 mass parts of isobornyl acrylate, 10 mass parts of N-acryloylmorpholine, and 25 mass parts of 2-hydroxyethyl acrylate. The molecular weight of the (meth)acrylic ester polymer (A) was measured by the method, which will be described later. The weight-average molecular weight (Mw) was 500,000.

### 2. Preparation of Pressure Sensitive Adhesive Composition

The coating solution of a pressure sensitive adhesive composition was obtained through mixing and sufficiently stirring 100 mass parts (solid content equivalent, here and hereinafter) of the (meth)acrylic ester polymer (A) obtained in the above step (1), 0.2 mass parts of an isocyanate-based crosslinker (B1; available from Mitsui Chemicals, Inc., product name "TAKENATE D-110N") as the crosslinker (B), 8 mass parts of ε-caprolactone-modified tris-(2-acryloxyethyl) isocyanurate (available from SHIN-NAKAMURA CHEMICAL Co., Ltd., product name "NK Ester A-9300-1CL") as the active energy ray curable component (C), 0.8 mass parts of 2,4,6-trimethylbenzoyl-diphenyl-phosphine oxide (D1) as the photopolymerization initiator (D), and 0.2 mass parts of 3-glycidoxypropyltrimethoxysilane as the silane coupling agent and diluting the mixture with methyl ethyl ketone.

Here, Table 1 lists the formulations (solid content equivalents) of the pressure sensitive adhesive compositions when the (meth)acrylic ester polymer (A) is 100 mass parts (solid content equivalent). Details of the simplified names listed in Table 1 and additional information are as follows.

### [(Meth)acrylic ester polymer (A)]

BA: n-butyl acrylate
2EHA: 2-ethylhexyl acrylate
IBXA: isobornyl acrylate
ACMO: N-acryloylmorpholine
HEA: 2-hydroxyethyl acrylate
AA: Acrylic acid

### [Crosslinker (B)]

B1: isocyanate-based crosslinker (available from Mitsui Chemicals, Inc., product name "TAKENATE D-110N")
B2: 1,3-bis(N,N-diglycidylaminomethyl)cyclohexane [Photopolymerization initiator (D)]
D1: 2,4,6-trimethylbenzoyl-diphenyl-phosphine oxide
D2: mixture of benzophenone and 1-hydroxycyclohexyl phenyl ketone (mass ratio 50:50)

### [Additives]

E1: 1-[N,N-bis(2-ethylhexyl)aminomethyl)-4-ethyl-1H-benzotriazole as a corrosion inhibitor
E2: benzophenone-based ultraviolet absorber (available from Solvay, product name "Cyasorb UV-24")
E3: cesium tungsten oxide as a near-infrared absorbing material (available from Sumitomo Metal Mining Co., Ltd., product name "YMF-02AS")

### 3. Production of Pressure Sensitive Adhesive Sheet

The release-treated surface of a release sheet R1 was coated with the coating solution of the obtained pressure sensitive adhesive composition by using a knife coater, and heat treatment was then performed at 90°C for 1 minute to form a coating layer. In the release sheet R1, one surface of a polyethylene terephthalate film was subjected to release treatment with a silicone-based release agent.

Subsequently, the coating layer on the release sheet R1 obtained as above and a release sheet R2 obtained by release-treating one surface of a polyethylene terephthalate film with a silicone-based release agent were bonded together so that the release-treated surface of the release sheet R2 was in contact with the coating layer. They were then aged under a condition of 23°C and 50% RH for 7 days to produce a pressure sensitive adhesive sheet composed of a configuration of release sheet R2/pressure sensitive adhesive layer (thickness: 25 µm)/release sheet R1. The release sheet R1 had a greater release force than the release sheet R2. The thickness of the pressure sensitive adhesive layer is a value measured using a constant-pressure thickness meter (available from TECLOCK Co., Ltd., product name "PG-02") according to JIS K7130 (here and hereinafter).

### 4. Production of Planar Heating Member

### (1) Production of Heater Layer

The release-treated surface of another release sheet R1 was coated with an epoxy-based thermosetting hardnable pressure sensitive adhesive. A number of electric heating wires (carbon-coated tungsten wires, diameter 10 µm) were provided on the coating layer. An epoxy-based thermosetting hardnable pressure sensitive adhesive was then applied so as to cover the electric heating wires, and another release sheet R2 was laminated so that the release-treated surface of the release sheet R2 would cover the coating surface. This produced a heater layer in which the electric heating wires were embedded in the epoxy-based thermosetting hardnable pressure sensitive adhesive. At that time, the spacing between adjacent electric heating wires was equal (0.5 mm).

### (2) Lamination of Heater Layer

The heater layer from which the release sheet R2 had been removed was attached to one surface of a non-alkali glass plate (thickness 1.1 mm) as a substrate and heated/pressurized at 0.5 MPa and 120°C for 30 minutes in an autoclave available from KURIHARA SEISAKUSHO Co., Ltd. This caused the thermosetting hardnable pressure sensitive adhesive of the heater layer to thermally cure. After that, the release sheet R1 was removed from the heater layer. The thickness of the heater layer after thermal curing was 15 µm.

### (3) Lamination of Pressure Sensitive Adhesive Layer and Protective Layer

The release sheet R2 was removed from the pressure sensitive adhesive sheet obtained above, and the exposed pressure sensitive adhesive layer was attached to the heater layer. Subsequently, the release sheet R1 was removed from the pressure sensitive adhesive layer on the heater layer, and a polycarbonate film (thickness 100 µm) as the protective layer was attached to the exposed pressure sensitive adhesive layer.

After that, the above laminate was irradiated with active energy rays (ultraviolet rays; UV) through the protective layer under the following condition X to cure the pressure sensitive adhesive layer with the active energy rays. Thus, a planar heating member composed of protective layer/pressure sensitive adhesive layer/heater layer (planar heating element)/substrate was produced.

### «Active Energy Ray Irradiation Condition X»

- Using a high-pressure mercury lamp
- Illuminance of 200 mW/cm² and light amount of 1,000 mJ/cm²
- Using "UVPF-A1" available from EYE GRAPHICS CO., LTD. as a UV illuminance/light amount meter

### <Examples 2 to 6, 8, and 9>

Pressure sensitive adhesive sheets and planar heating members were produced in the same manner as in Example 1 except that the type and ratio of monomers constituting the (meth)acrylic ester polymer (A), the weight-average molecular weight (Mw) of the (meth)acrylic ester polymer (A), the type and compounding amount of the crosslinker (B), the compounding amount of the active energy ray curable component (C), the type and compounding amount of the photopolymerization initiator (D), the compounding amount of the silane coupling agent, the type and compounding amount of additives, and the thickness of the pressure sensitive adhesive layer were as listed in Table 1. The thickness of the pressure sensitive adhesive layer was changed by changing the thickness and/or number of layers of the pressure sensitive adhesive layer formed on the release sheet.

### <Example 7>

A pressure sensitive adhesive sheet was produced in the same manner as in Example 1 except that the thickness of the pressure sensitive adhesive layer was 50 µm. The pressure sensitive adhesive sheet obtained was irradiated with active energy rays (ultraviolet rays; UV) through the release sheet R2 under the same condition as Condition X above, and the pressure sensitive adhesive layer was cured with the active energy rays.

A planar heating member was produced in the same manner as in Example 1 using the above pressure sensitive adhesive sheet. However, the planar heating member was not irradiated with active energy rays.

### <Example 10>

The coating solution of a pressure sensitive adhesive composition was obtained through mixing and sufficiently stirring 100 mass parts of the (meth)acrylic ester polymer (A) prepared in the same manner as in Example 1, 0.25 mass parts of an isocyanate-based crosslinker (B1; available from Mitsui Chemicals, Inc., product name "TAKENATE D-110N") as the crosslinker (B), and 0.2 mass parts of 3-glycidoxypropyltrimethoxysilane as the silane coupling agent and diluting the mixture with methyl ethyl ketone.

A pressure sensitive adhesive sheet was produced in the same manner as in Example 1 using the obtained coating solution of the pressure sensitive adhesive composition except that the thickness of the pressure sensitive adhesive layer was 50 µm. In addition, a planar heating member was produced in the same manner as in Example 1 using the pressure sensitive adhesive sheet. However, the planar heating member was not irradiated with active energy rays.

### <Comparative Example 1>

A pressure sensitive adhesive sheet and a planar heating member were produced in the same manner as in Example 10 except that the type and ratio of the monomers constituting the (meth) acrylic acid ester polymer (A), the weight-average molecular weight (Mw) of the (meth) acrylic acid ester polymer (A), the type and compounding amount of additives, and the thickness of the pressure sensitive adhesive layer were as listed in Table 1. In Comparative Example 1, 20 mass parts of cesium tungsten oxide (E3) was added to the pressure sensitive adhesive as a near infrared absorbing material.

### <Comparative Example 2>

The coating solution of a pressure sensitive adhesive composition was obtained through mixing and sufficiently stirring 100 mass parts of a commercially available acrylic alkyl ester-based copolymer (available from LION SPECIALTY CHEMICALS CO., LTD., product name "AS-665," Mw: 600,000) as the (meth)acrylic acid ester polymer (A) and 8 mass parts of an isocyanate-based crosslinker (B1; available from Mitsui Chemicals, Inc., product name "TAKENATE D-110N") as the crosslinker (B) and diluting the mixture with methyl ethyl ketone.

A pressure sensitive adhesive sheet and a planar heating member were produced in the same manner as in Example 10 except that the obtained coating solution of the pressure sensitive adhesive composition was used.

The aforementioned weight-average molecular weight (Mw) refers to a weight-average molecular weight that is measured as a polystyrene equivalent value under the following condition using gel permeation chromatography (GPC) (GPC measurement).

### «Measurement Condition»

- GPC measurement device: HLC-8020 available from Tosoh Corporation
- GPC columns (passing through in the following order): available from Tosoh Corporation
   TSK guard column HXL-H
   TSK gel GMHXL (×2)
   TSK gel G2000HXL
- Solvent for measurement: tetrahydrofuran
- Measurement temperature: 40°C

### <Testing Example 1> (Measurement of Optical Properties)

The pressure sensitive adhesive layer of the pressure sensitive adhesive sheet produced in each of Examples and Comparative Examples was measured for the total luminous transmittance (%) and diffuse transmittance (%) at each wavelength with a 1 nm pitch in the wavelength region of 380 to 1,500 nm using a spectrophotometer (available from Shimadzu Corporation, product name "UV-3600 Ultraviolet-Visible-Near Infrared Spectrophotometer").

Subsequently, the transmitted light diffusivity (%) at each wavelength with a 1 nm pitch in the wavelength region of 380 to 1,500 nm was calculated by dividing the diffuse transmittance (%) at each wavelength with a 1 nm pitch by the total luminous transmittance (%).

As described above, from the total luminous transmittance (%) measured at each wavelength with a 1 nm pitch in the wavelength region of 380 to 1,500 nm, the average value of the measured values in the wavelength region of 380 to 780 nm (visible light region) and the average value of the measured values in the wavelength region of 800 to 1,100 nm (infrared region) were calculated. Likewise, for the transmitted light diffusivity (%), the average value of the measured values in the wavelength region of 380 to 780 nm (visible light region) and the average value of the measured values in the wavelength region of 800 to 1,100 nm (infrared region) were calculated. These results are listed in Table 2.

### <Testing Example 2> (Measurement of Gel Fraction)

The pressure sensitive adhesive sheet obtained in each of Examples and Comparative Examples was cut into a size of 80 mm×80 mm, the pressure sensitive adhesive layer was wrapped in a polyester mesh (mesh size of 200), the mass was weighed with a precision balance, and the mass of the pressure sensitive adhesive alone was calculated by subtracting the mass of the above mesh itself. The mass at that time is M1.

Then, the pressure sensitive adhesive wrapped in the above polyester mesh was immersed in ethyl acetate at room temperature (23°C) for 24 hours. After that, the pressure sensitive adhesive was taken out, air-dried under an environment of a temperature of 23°C and a relative humidity of 50% for 24 hours, and further dried in an oven at 80°C for 12 hours. After the drying, the mass was weighed with a precision balance, and the mass of the pressure sensitive adhesive alone was calculated by subtracting the mass of the mesh itself. The mass at that time is M2. The gel fraction (%) is represented by (M2/M1)×100. Through this operation, the gel fraction of the pressure sensitive adhesive (before UV; %) was derived. The results are listed in Table 2.

In addition, the pressure sensitive adhesive layer of the pressure sensitive adhesive sheet produced in each of Examples 1 to 6, 8, and 9 was irradiated with active energy rays (ultraviolet rays; UV) under the same condition as the above condition X through the release sheet R2 to cure the pressure sensitive adhesive layer. For the pressure sensitive adhesive of the pressure sensitive adhesive layer after curing, the gel fraction (after UV; %) was derived in the same manner as above. The results are listed in Table 2.

### <Testing Example 3> (Measurement of Storage Elastic Modulus)

The release sheet was removed from the pressure sensitive adhesive sheet obtained in each of Examples and Comparative Examples, and a plurality of pressure sensitive adhesive layers were laminated to have a thickness of 3 mm. A cylindrical body (height of 3 mm) having a diameter of 8 mm was punched out from the obtained laminate of the pressure sensitive adhesive layers, and a compact was thus obtained.

In Examples 1 to 6, 8, and 9, the above compact was irradiated with active energy rays (ultraviolet rays; UV) under the same condition as in Testing Example 2 to cure the pressure sensitive adhesive with the active energy rays, and this was used as a sample. In Examples 7 and 10 and Comparative Examples 1 and 2, the compact was used as a sample.

For the above sample, the storage elastic moduli (before UV; MPa) at -20°C, 23°C, and 85°C were measured by a torsional shear method according to JIS K7244-6 using a viscoelasticity measurement device (available from Physica, product name "MCR300") under the following condition. The results are listed in Table 2.

### Measurement frequency: 1Hz

Rate of temperature rise: 5°C/min
Measurement temperature: -20°C, 23°C, 85°C

In addition, from the results obtained above, the ratio of the storage elastic modulus G' (-20) at -20°C to the storage elastic modulus G' (23) at 23°C (storage elastic modulus G'(-20)/storage elastic modulus G' (23)), the ratio of the storage elastic modulus G' (23) at 23°C to the storage elastic modulus G' (85) at 85°C (storage elastic modulus G'(23)/storage elastic modulus G' (85)), and the ratio of the storage elastic modulus G' (-20) at -20°C to the storage elastic modulus G' (85) at 85°C (storage elastic modulus G' (-20)/storage elastic modulus G' (85)) were calculated. The results are listed in Table 2.

### <Testing Example 4> (Measurement of Adhesive Strength / Evaluation of Adhesive Reliability)

The release sheet R2 was removed from the pressure sensitive adhesive sheet prepared in each of Examples and Comparative Examples, and the exposed pressure sensitive adhesive layer was bonded to the easy-adhesion layer of a polyethylene terephthalate (PET) film having the easy-adhesion layer (available from TOYOBO CO., LTD., product name "COSMOSHINE A4360," thickness: 100 µm) to obtain a laminate of release sheet R1/pressure sensitive adhesive layer/PET film. The obtained laminate was cut into a width of 25 mm and a length of 110 mm.

The release sheet R1 was removed from the above laminate under an environment of 23°C and 50% RH, and the exposed pressure sensitive adhesive layer was attached to soda-lime glass plate (available from Nippon Sheet Glass Company, Ltd., product name "Soda-lime Glass," thickness: 1.1 mm) and then pressurized in an autoclave available from KURIHARA SEISAKUSHO Co., Ltd. at 0.5 MPa and 50°C for 20 minutes.

In Examples 1 to 6, 8, and 9, the above laminate was irradiated with active energy rays (ultraviolet rays; UV) through the PET film under the same condition as in Testing Example 2 to cure the pressure sensitive adhesive with the active energy rays, and this was used as a sample. In Examples 7 and 10 and Comparative Examples 1 and 2, the laminate after the above autoclave treatment was used as a sample.

The obtained samples were left untouched under conditions of 23°C/50% relative humidity, -20°C, and 85°C for 24 hours. Then, the adhesive strength (N/25 mm) when the laminate of the PET film and pressure sensitive adhesive layer was peeled off from the adherend was measured under a condition of a peel speed of 300 mm/min and a peel angle of 180° using a tensile tester (available from ORIENTEC Co., LTD., product name "TENSILON"). The measurement was conducted according to JIS Z0237: 2009 except for the condition described herein. The results are listed in Table 2.

Furthermore, the above sample was subjected to 200 cycles of a heat shock (HS) test in which temperatures of - 35°C and 70°C were each applied for 30 minutes in alternation, and then left untouched for 24 hours under conditions of 23°C/50% RH. After that, the adhesive strength (adhesive strength after HS; N/25 mm) was measured in the same manner as above. The results are listed in Table 2.

From the results obtained above, the ratio of the adhesive strength after the above heat shock (HS) (adhesive strength after HS) to the adhesive strength after being left untouched under the above conditions of 23°C/50% RH was calculated (adhesive strength after HS/adhesive strength at ordinary temperature). The results are listed in Table 2.

In addition, on the basis of the adhesive strength after being left untouched under the above conditions of 85°C and the following criteria, the adhesive reliability at high temperatures was evaluated. The results are listed in Table 2.

### «High-temperature Adhesive Reliability»

⊚... High-temperature adhesive strength was 10 N/25 mm or more
○... High-temperature adhesive strength was 2 N/25 mm or more and less than 10 N/25 mm
△... High-temperature adhesive strength was 1 N/25 mm or more and less than 2 N/25 mm
×... High-temperature adhesive strength was less than 1 N/25 mm

Furthermore, the adhesive reliability after heat shock was evaluated based on the adhesive strength after heat shock (HS) described above (adhesive strength after HS) and the following criteria. The results are listed in Table 2.

### «Adhesive Reliability after HS»

⊚... Adhesive strength after HS was 40 N/25 mm or more
○... Adhesive strength after HS was 20 N/25 mm or more and less than 40 N/25 mm
△... Adhesive strength after HS was 10 N/25 mm or more and less than 20 N/25 mm
×... Adhesive strength after HS was less than 10 N/25 mm

### <Testing Example 5> (Evaluation of Blister Resistance)

The planar heating member produced in each of Examples and Comparative Examples was subjected to 200 cycles of a heat shock test in which temperatures of -35°C and 70°C were each applied for 30 minutes in alternation. After that, a 10x magnifying glass was used to confirm the presence or absence of air bubbles and floating/delamination at the interface between the pressure sensitive adhesive layer and the adherend (heater layer/protective layer). The evaluation criteria are as follows. The results are listed in Table 2.
⊚ ... No bubbles or floating/delamination were confirmed.
○... A few small air bubbles were confirmed, but no floating/delamination was confirmed.
×... Large air bubbles or floating/delamination was confirmed.

### <Testing Example 6> (Evaluation of Sensor Sensitivity)

### (1) Sensor Sensitivity to Visible Light

The pressure sensitive adhesive layer of the pressure sensitive adhesive sheet produced in each of Examples and Comparative Examples was attached to a glass plate, and the obtained laminate of the pressure sensitive adhesive layer and the glass plate was used as the evaluation sample. In addition, a paper with black letters (alphabet of A to G and numbers of 0 to 9/type of letters: Times New Roman/letter size: 36, 26, 18 points) printed on a white background was prepared. The above sample for evaluation was placed in front of the lens of a digital camera (available from CANON INC., product name "IXY 200"), and the paper with the printed letters was photographed through the sample for evaluation. At that time, the distance between the digital camera and the sample for evaluation and the distance between the sample for evaluation and the paper with the printed letters were each 40 cm.

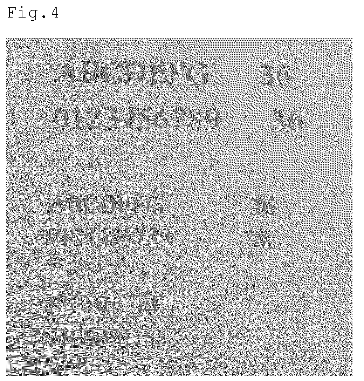

The captured images were confirmed, and the visible light detection performance (sensor sensitivity) was evaluated based on the following criteria from the viewpoint of whether the letters were recognizable. The evaluation results are listed in Table 2. For reference, the image captured for Example 1 is shown in FIG. 3, and the image captured for Comparative Example 1 is shown in FIG. 4.
○: All letters were recognizable without problems.
×: Some letters were difficult to recognize.

### (2) Sensor Sensitivity to Near-infrared Light

The pressure sensitive adhesive layer of the pressure sensitive adhesive sheet produced in each of Examples and Comparative Examples was attached to a glass plate, and the obtained laminate of the pressure sensitive adhesive layer and the glass plate was used as the measurement sample. In addition, two mobile phones (available from SHARP CORPORATION, product name "AQUOS Mobile Phone SH-01J") capable of infrared communication (communication by near-infrared light) were prepared. First, the infrared ray transmitting-side mobile phone, the above measurement sample, and the infrared ray receiving-side mobile phone were arranged in this order. At that time, the infrared communication ports of the two mobile phones were arranged so as to face each other. The distance between the infrared ray transmitting-side mobile phone and the measurement sample and the distance between the measurement sample and the infrared ray receiving-side mobile phone were each 20 cm. The surface of the infrared ray transmitting-side mobile phone on the near-infrared light source side and the surface of the measurement sample on the pressure sensitive adhesive layer side were arranged so as to face each other.

Infrared communication was conducted between the infrared ray transmitting-side mobile phone and the infrared ray receiving-side mobile phone using the infrared communication function of the above mobile phones. Whether or not the near-infrared light was able to be received by the infrared ray receiving-side mobile phone was confirmed 10 times, and the near-infrared light (IR) detection performance (sensor sensitivity) was evaluated according to the following criteria. The evaluation results are listed in Table 2.
**○...** Near-infrared light was received normally all 10 times.
×... Near-infrared light was not able to be received one or more times.

**[Table 1]**

| | (Meth)acrylic ester polymer (A) | | Crosslinker (B) | | Active energy ray curable component (C) | Photopolymerization initiator (D) | | Silane coupling agent | Additives | | UV irradiation | Tchikeness-of pressure sensitive adhesive layer (µm) |
|---|---|---|---|---|---|---|---|---|---|---|---|---|
| | Composition | Mw | Type | mass parts | mass parts | Type | mass parts | mass parts | Type | mass parts | | |
| Example 1 | B4/2EHA/IBXA/ACMO/HEA =30/25/10/10/25 | 500k | B1 | 0.2 | 8 | D1 | 0.8 | 0.2 | - | - | After bonding | 25 |
| Example 2 | | | B1 | 0.2 | 8 | D1 | 0.5 | 0.2 | - | - | After bonding | 50 |
| Example 3 | | | B1 | 0.2 | 8 | D1 | 0.8 | 0.2 | - | - | After bonding | 150 |
| Example 4 | | | B1 | 0.2 | 8 | D1 | 0.3 | - | - | - | After bonding | 50 |
| Example 5 | | | B1 | 0.2 | 8 | D1 | 0.8 | 0.2 | E1 | 0.2 | After bonding | 50 |
| Example 6 | | | B1 | 0.2 | 8 | D1 | 0.8 | 0.2 | E2 | | After bonding | 50 |
| Example 7 | | | B1 | 0.2 | 8 | D1 | 0.8 | 0.2 | - | - | After bonding | 50 |
| Example 8 | 2EHA/IBXA/ACMO/HEA=65/10/10/15 | 500k | B1 | 0.2 | 5 | D2 | 0.5 | 0.2 | - | - | After bonding | 50 |
| Example 9 | BA/AA =90/10 | 400k | B2 | 0.05 | 10 | D2 | 1 | 0.2 | - | - | After bonding | 50 |
| Example 10 | 2EHA/IBXA/ACMO/HEA=65/10/10/15 | 500k | B1 | 0.25 | - | - | - | 0.2 | - | - | - | 50 |
| Comparative Example 1 | BA/2EHA/IBXA/ACMO/HEA =30/25/10/10/25 | 800k | B1 | 0.25 | - | - | - | 0.2 | E3 | 20 | - | 25 |
| Comparative Example 2 | Commercially available one | 600k | B1 | 8 | - | - | - | - | - | - | - | 50 |

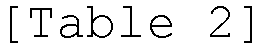

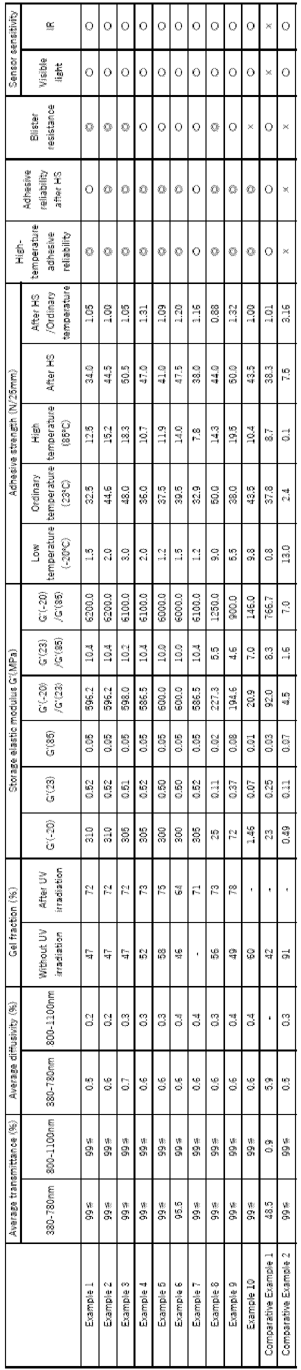

As found from Table 2, the pressure sensitive adhesive sheets produced in Examples were excellent in the adhesive reliability after heat shock and at high temperatures and also excellent in the sensor sensitivity to visible light and near-infrared light. The pressure sensitive adhesive sheets produced in Examples 1 to 9 were also excellent in the blister resistance in a heat shock test.

### Industrial Applicability

The pressure sensitive adhesive sheet, pressure sensitive adhesive layer-equipped planar heating element, and planar heating member according to the present invention are suitable for being applied to optical detection systems, particularly LiDAR.

### Description of Reference Numerals

- 1...: Pressure sensitive adhesive sheet
11... Pressure sensitive adhesive layer
12a, 12b... Release sheet
- 2...: Planar heating member
21... Substrate
22... Heater layer (planar heating element)
23... Protective layer

## Claims

1. A pressure sensitive adhesive sheet comprising a pressure sensitive adhesive layer to be attached to a planar heating element, wherein
an average value of luminous transmittance of the pressure sensitive adhesive layer in a wavelength region of 380 to 780 nm is 60% or more,
an average value of luminous transmittance of the pressure sensitive adhesive layer in a wavelength region of 800 to 1,000 nm is 60% or more, and
an adhesive strength is 10 N/25 mm or more when measured through: preparing a laminate configured such that a polyethylene terephthalate film having a thickness of 100 µm and a soda-lime glass plate having a thickness of 1.1 mm are bonded together via the pressure sensitive adhesive layer (in a case where a pressure sensitive adhesive constituting the pressure sensitive adhesive layer is active energy ray curable, the laminate is that after the bonding and active energy ray curing); subjecting the laminate to 200 cycles of a heat shock test in which -35°C and 70°C are each applied for 30 minutes in alternation; then leaving the laminate untouched under a temperature of 23°C for 24 hours; and subsequently peeling off a laminate of the polyethylene terephthalate film and the pressure sensitive adhesive layer from the soda-lime glass plate under a condition of a peel speed of 300 mm/min and a peel angle of 180°.

2. The pressure sensitive adhesive sheet according to claim 1, wherein
an average value of transmitted light diffusivity of the pressure sensitive adhesive layer in a wavelength region of 380 to 780 nm is 10% or less, and
an average value of transmitted light diffusivity of the pressure sensitive adhesive layer in a wavelength region of 800 to 1,000 nm is 10% or less.

3. The pressure sensitive adhesive sheet according to claim 1, wherein the adhesive strength of the pressure sensitive adhesive sheet to soda-lime glass at 23°C (in the case where the pressure sensitive adhesive constituting the pressure sensitive adhesive layer is active energy ray curable, the adhesive strength is that after being attached to the soda-lime glass and cured by active energy rays) is 10 N/25 mm or more.

4. The pressure sensitive adhesive sheet according to claim 1, wherein the adhesive strength of the pressure sensitive adhesive sheet to soda-lime glass at 85°C (in the case where the pressure sensitive adhesive constituting the pressure sensitive adhesive layer is active energy ray curable, the adhesive strength is that after being attached to the soda-lime glass and cured by active energy rays) is 1 N/25 mm or more.

5. The pressure sensitive adhesive sheet according to claim 1, wherein the adhesive strength of the pressure sensitive adhesive sheet to soda-lime glass at -20°C (in the case where the pressure sensitive adhesive constituting the pressure sensitive adhesive layer is active energy ray curable, the adhesive strength is that after being attached to the soda-lime glass and cured by active energy rays) is 0.2 N/25 mm or more and 20 N/25 mm or less.

6. The pressure sensitive adhesive sheet according to claim 1, wherein the pressure sensitive adhesive constituting the pressure sensitive adhesive layer is an acrylic-based pressure sensitive adhesive.

7. The pressure sensitive adhesive sheet according to claim 6, wherein the acrylic-based pressure sensitive adhesive is an active energy ray curable pressure sensitive adhesive.

8. The pressure sensitive adhesive sheet according to claim 6, wherein the acrylic pressure sensitive adhesive is a pressure sensitive adhesive formed by thermal crosslinking and curing with active energy rays.

9. The pressure sensitive adhesive sheet according to claim 1, wherein
the pressure sensitive adhesive sheet comprises two release sheets, and
the pressure sensitive adhesive layer is interposed between the two release sheets so as to be in contact with release surfaces of the two release sheets.

10. A pressure sensitive adhesive layer-equipped planar heating element comprising:
a planar heating element; and
the pressure sensitive adhesive layer of the pressure sensitive adhesive sheet according to any one of claims 1 to 9 attached to at least one surface side of the planar heating element.

11. A planar heating member comprising:
a planar heating element;
a protective layer; and
the pressure sensitive adhesive layer of the pressure sensitive adhesive sheet according to any one of claims 1 to 9 for bonding the planar heating element and the protective layer together.
